# EUROPÄISCHE PATENTANMELDUNG

(11) **EP 4 815 297 A1**
(43) Veröffentlichungstag der Anmeldung: **30.09.2026**
(21) Anmeldenummer: 25165870.4
(22) Anmeldetag: 25.03.2025
(51) Int. Cl.: H02S 50/15

(54) **VERFAHREN UND SYSTEM ZUR UNTERSUCHUNG EINER STAPELSOLARZELLE**

(71) Anmelder: Forschungszentrum Jülich GmbH, 52428 Jülich (DE)
(72) Erfinder: PIETERS, Dr., Bart Elger, 52428 Jülich (DE); RAU, Prof. Dr., Uwe, 52428 Jülich (DE); OBETTA, Ernest, 52428 Jülich (DE); WERNER, Jonathan, 52382 Niederzier (DE); SMIRNOV, Dr., Vladimir, 52428 Jülich (DE); GERBER, Dr., Andreas, 50827 Köln (DE)
(74) Vertreter: Gille Hrabal Partnerschaftsgesellschaft mbB Patentanwälte

(57) **Zusammenfassung**

Die Erfindung betrifft ein Verfahren und ein System zur Untersuchung einer Stapelsolarzelle sowie eine Verwendung einer Multispektralkamera zur Untersuchung einer Stapelsolarzelle. Ein Verfahren zur Untersuchung einer Stapelsolarzelle (1) umfasst Erfassen (20) von Lumineszenzsignalen (5) einer Stapelsolarzelle (1) in mehreren Farbkanälen (K1, K2, K3), wobei die Lumineszenzsignale (5) überlagerte Einzelsignale (7, 8) unterschiedlicher Solarzellen (2, 3) der Stapelsolarzelle (1) enthalten, und Berechnen (22) von Einzelsignalen (7, 8) einer Solarzelle (2) der Stapelsolarzelle (1) aus den erfassten Lumineszenzsignalen (5).

## Beschreibung

Die Erfindung betrifft ein Verfahren und ein System zur Untersuchung einer Stapelsolarzelle sowie eine Verwendung einer Multispektralkamera zur Untersuchung einer Stapelsolarzelle.

Zur Untersuchung von Solarzellen, z. B. zur Qualitätskontrolle, wird z. B. das Elektrolumineszenz-Verfahren verwendet. Dabei wird ausgenutzt, dass eine Solarzelle auch Licht erzeugen kann, wenn sie mit einer externen Spannung beaufschlagt wird. Das erzeugte Licht kann detektiert werden. Schadhafte Bereiche emittieren anderes Licht, weniger Licht oder kein Licht. Auf diese Weise können Fehler in Solarzellen, beispielsweise defekte Bereiche, identifiziert und lokalisiert werden. So kann z. B. nach der Herstellung eine Qualitätskontrolle der Solarzelle erfolgen.

In Stapelsolarzellen sind mehrere Solarzellen übereinander geschichtet. Licht, das von der obersten Solarzelle nicht zur Erzeugung von Strom genutzt wird, fällt zumindest teilweise auf die darunterliegende Solarzelle(n) und kann dort für die Stromerzeugung genutzt werden. So kann die Ausbeute maximiert werden.

Zur Untersuchung von Stapelsolarzellen können unterschiedliche optische Filter verwendet werden, die der Kamera vorgeschaltet werden. Mit einem ersten optischen Filter, der nur den Wellenlängenbereich der ersten Solarzelle durchlässt, kann die erste Solarzelle untersucht werden. Mit einem zweiten optischen Filter, der nur den Wellenlängenbereich der zweiten Solarzelle durchlässt, kann anschließend nur die zweite Solarzelle untersucht werden. So können nacheinander Untersuchungen aller Solarzellen erfolgen. Dies dauert allerdings lange und ist aufwändig. Alternativ können mehrere Kameras verwendet werden, die gleichzeitig mittels unterschiedlicher optischer Filter entsprechende Aufnahmen machen. Hierbei werden allerdings mehrere Kameras benötigt, was auch diese Variante aufwändig macht. Zudem können die Kameras nicht zeitgleich aus derselben Position Aufnahmen machen.

Die Aufgabe besteht darin, die Untersuchung von Stapelsolarzellen zu vereinfachen. Insbesondere sollen die oben genannten Nachteile zumindest teilweise behoben werden.

Die Aufgabe wird gelöst durch ein Verfahren zur Untersuchung einer Stapelsolarzelle gemäß Anspruch 1 sowie ein System und eine Verwendung gemäß den nebengeordneten Ansprüchen. Vorteilhafte Ausgestaltungen ergeben sich aus den Unteransprüchen.

Zur Lösung der Aufgabe dient ein Verfahren zur Untersuchung einer Stapelsolarzelle. Das Verfahren umfasst ein Erfassen von Lumineszenzsignalen einer Stapelsolarzelle in mehreren Farbkanälen. Insbesondere enthalten die Lumineszenzsignale überlagerte Einzelsignale unterschiedlicher Solarzellen der Stapelsolarzelle. Das Verfahren umfasst ferner ein Berechnen von Einzelsignalen einer Solarzelle der Stapelsolarzelle aus den erfassten Lumineszenzsignalen.

Erfindungsgemäß können die Einzelsignale aus den überlagerten Lumineszenzsignalen errechnet werden. Es ist somit nicht mehr nötig, nacheinander oder gleichzeitig mehrere Bilder mit unterschiedlichen Filtern zu erfassen. Dadurch wird die Untersuchung der Solarzelle vereinfacht. Insbesondere wird nur ein Bild erzeugt, welches die überlagerten Lumineszenzsignale der unterschiedlichen Solarzellen enthält. Jede Solarzelle der Stapelsolarzelle emittiert Licht unterschiedlicher Wellenlängen.

Die Erfindung beruht auf der Erkenntnis, dass aus Lumineszenzsignalen, die mit mehreren Farbkanälen erfasst werden, Einzelsignale berechnet oder extrahiert werden können. Es hat sich zudem gezeigt, dass es dabei nicht notwendig ist, dass die erfassten Farbkanäle mit den Spektralkanälen der einzelnen Solarzellen übereinstimmen oder diese repräsentieren. Es kann also grundsätzlich eine beliebige Multispektralkamera verwendet werden bzw. mit einer beliebigen Stapelsolarzelle kombiniert werden.

Eine Stapelsolarzelle umfasst mehrere Solarzellen, die übereinander geschichtet bzw. vertikal gestapelt sind. In einer Stapelsolarzelle absorbiert die oberste Solarzelle einen bestimmten Wellenlängenbereich des Lichts, beispielsweise kurzwelliges Licht, und lässt andere Wellenlängenbereiche, hier entsprechend Licht mit längeren Wellenlängen, hindurch. Die anschließende, zweite Solarzelle wird mit dem verbleibenden Licht bestrahlt und absorbiert einen bestimmten Wellenlängenbereich dieses Lichts. Beispielsweise absorbiert die zweite Solarzelle Licht mit längeren Wellenlängen als die erste Solarzelle. Eine ggf. vorhandene anschließende, dritte Solarzelle wird mit dem von der zweiten Solarzelle hindurch gelassenen Licht bestrahlt und absorbiert wieder einen Teil dieses Lichts.

Eine Stapelsolarzelle kann aufgrund von Lumineszenz Licht emittieren, welches als Lumineszenzsignal bezeichnet werden kann. Lumineszenzsignale sind elektromagnetische Strahlung, die von den Solarzellen aufgrund von außen zugeführter Energie emittiert wird. Insbesondere basieren die Lumineszenzsignale auf Elektrolumineszenz, also auf elektrischer Anregung der Solarzellen. Insbesondere enthalten die Lumineszenzsignale Licht, welches von jeder der einzelnen Solarzellen emittiert wird. In den Lumineszenzsignalen liegen diese Anteile in überlagerter Form vor. Das emittierte Licht einer einzelnen Solarzelle, also das Einzelsignal, kann als Spektralkanal bezeichnet werden. Die Summe aller Einzelsignale ergibt typischerweise das Lumineszenzsignal der Stapelsolarzelle. Insbesondere überschneiden sich die Einzelsignale derart, dass eine Vielzahl von Frequenzen oder Frequenzbereichen vorliegt, in denen mehrere oder alle Solarzellen Licht emittieren. Es kann also anhand der Frequenzen allein kein Einzelsignal isoliert werden.

Ein Beispiel für eine Stapelsolarzelle ist eine Tandem-Solarzelle, die zwei Solarzellen enthält. Die Stapelsolarzelle kann aber auch drei, vier, fünf, sechs, sieben, acht, neun, zehn oder mehr Solarzellen umfassen. Typischerweise umfasst die Stapelsolarzelle nicht mehr als 20 Solarzellen. Je mehr Solarzellen enthalten sind, desto höher kann - bei geeigneter Verschaltung - der Wirkungsgrad und damit die elektrische Energieausbeute sein. Insbesondere wird die Stromstärke reduziert und/oder die Spannung erhöht. Im Gegenzug steigt der technische Aufwand.

Die Signale werden in mehreren Farbkanälen erfasst, die auch als Wellenlängenbereiche oder Spektralbereiche bezeichnet werden. Es werden insbesondere gleichzeitig und/oder aus derselben Perspektive mehrere Teilbilder beispielsweise eines Gegenstands erfasst, die auf elektromagnetischer Strahlung jeweils unterschiedlicher Wellenlängen bzw. Wellenlängenbereiche basieren. Diese wird im vorliegenden Dokument auch als Licht oder (elektromagnetische) Strahlung bezeichnet, unabhängig davon, ob es sich um für das menschliche Auge sichtbare oder unsichtbare Wellenlängenbereiche handelt. Grundsätzlich ist es unerheblich, ob die Farbkanäle breit oder eng sind. Es ist auch nicht erforderlich, dass die Farbkanäle zusammen das natürliche Licht wiedergeben oder repräsentieren, wie dies bei einer RGB-Digitalkamera der Fall ist. Die Lumineszenzsignale können mit einer Multispektralkamera erfasst werden. Eine Multispektralkamera ist eine Kamera, die dazu eingerichtet ist, Lichtintensitäten in mehreren Farbkanälen zu erfassen. Ein Beispiel für eine Multispektralkamera ist eine handelsübliche RGB-Digitalkamera, z. B. eine Spiegelreflexkamera. Die Wellenlängen der erfassten Lumineszenzsignale befinden sich insbesondere im Bereich des sichtbaren Lichts und/oder im Infrarot-Bereich. Eine Multispektralkamera weist insbesondere eine Vielzahl von Bildpunkten oder Pixeln auf, mit denen die Stapelsolarzelle abgebildet werden kann.

Teilbilder meint, dass unterschiedliche Farben desselben Bildes in separaten Farbkanälen vorliegen. Ein Beispiel hierfür ist ein digitales Foto, bei dem die drei Farbkanäle rot, grün und blau (RGB) als überlagerte Teilbilder vorliegen und so gemeinsam das farbige Bild ergeben.

Erfasst werden Lumineszenzsignale, die sich aus überlagerten Lumineszenzsignalen der unterschiedlichen Solarzellen der Stapelsolarzelle zusammensetzen. Das Erfassen der Lumineszenzsignale enthält insbesondere das Erzeugen eines mehrfarbigen Bildes der Stapelsolarzelle oder zumindest eines Bereichs der Stapelsolarzelle bzw. mehrerer einfarbiger Teilbilder für unterschiedliche Farbkanäle.

Es werden typischerweise mehrere Lumineszenzsignale erfasst, weil die Multispektralkamera typischerweise mehrere Bildpunkte umfasst. Insbesondere wird für jeden Bildpunkt der Multispektralkamera zumindest ein Lumineszenzsignal erfasst.

Das Berechnen erfolgt insbesondere mit einer Recheneinheit. Es werden aus den erfassten Lumineszenzsignalen Einzelsignale berechnet oder extrahiert. Einzelsignale meint Lumineszenzsignale, die von einer einzelnen Solarzelle der Stapelsolarzelle emittiert werden. Es kann also ein Lumineszenzbild einer einzelnen Solarzelle rechnerisch isoliert werden. Die berechneten Einzelsignale werden insbesondere für die Untersuchung auf etwaige Defekte verwendet. Das Verfahren kann vor und/oder nach dem Erfassen eine Ermittlung umfassen, ob ein Trennen der Signale möglich ist.

Insbesondere umfasst das Verfahren ferner das Berechnen von Einzelsignalen einer weiteren Solarzelle der Stapelsolarzelle aus den Lumineszenzsignalen. Insbesondere umfasst das Verfahren das Berechnen von Einzelsignalen jeder Solarzelle der Stapelsolarzelle aus den Lumineszenzsignalen. Auf diese Weise können die Lumineszenzsignale der Stapelsolarzelle in die Einzelsignale aller einzelnen Solarzellen getrennt werden. Mit anderen Worten werden die Lumineszenzsignale der Stapelsolarzelle aufgeteilt. Es kann damit eine Diagnose jeder einzelnen Solarzelle und damit der gesamten Stapelsolarzelle erfolgen.

In einer Ausgestaltung werden die Lumineszenzsignale in mindestens drei Farbkanälen erfasst. In einer Ausgestaltung werden die Lumineszenzsignale in genau drei unterschiedlichen Farbkanälen erfasst. In einer Ausgestaltung werden die Lumineszenzsignale in mehr als drei unterschiedlichen Farbkanälen erfasst.

Es können aber vier, fünf, sechs, sieben, acht, neun, zehn oder mehr unterschiedliche Farbkanäle, etwa 15 oder etwa 20 unterschiedliche Farbkanälen verwendet werden. Typischerweise werden maximal 50 Farbkanäle verwendet, insbesondere maximal 25 Farbkanäle. Grundsätzlich gilt: je mehr Farbkanäle enthalten sind, desto besser können die Einzelsignale berechnet werden. Im Gegenzug steigt der technische Aufwand und das einfallende Licht teilt sich auf mehr Pixel auf, die ausreichend sensitiv sein müssen. Üblicherweise reduziert sich durch mehr Farbkanäle zudem die Auflösung, etwa bei der Verwendung von Filteranordnungen (auch als Farbfilteranordnungen bezeichnet), wie z. B. dem Bayer-Filter.

In einer Ausführungsform sind die Farbkanäle voneinander abgegrenzt. Mit anderen Worten gibt es keine Überschneidungen; jede Wellenlänge fällt in höchstens einen Farbkanal. Dies ermöglicht eine besonders gute Ermittlung von Einzelsignalen. Es ist jedoch für das erfindungsgemäße Verfahren nicht ausgeschlossen, dass Farbkanäle Überlappungen aufweisen. Die Farbkanäle müssen sich aber unterscheiden. Insbesondere unterscheiden sich die Farbkanäle in dem Spektralbereich, in dem die Solarzellen emittieren. Die Farbkanäle sollten in dem Spektralbereich, in dem die Solarzellen Licht emittieren, also unterschiedlich reagieren. Dann liegen linear unabhängige Reaktionen vor, aus denen die Einzelsignale berechnet werden können.

Grundsätzlich können zwei Farbkanäle für eine erfindungsgemäße Berechnung ausreichen. Dies ist allerdings von den konkreten Kanten der Farbkanäle sowie von dem emittierten Spektrum abhängig. Mit mindestens drei Farbkanälen können die Einzelsignale verbessert berechnet werden.

In einer Ausgestaltung umfassen die mindestens drei Farbkanäle die Farben Rot, Grün und Blau. Mit anderen Worten wird ein Bild erzeugt, das jeweilige Helligkeitswerte bzw. Teilbilder für Rot, Grün und Blau enthält. Ein erster Farbkanal enthält die Farbe Rot, ein zweiter Farbkanal enthält die Farbe Grün und ein dritter Farbkanal enthält die Farbe Blau. Dies ermöglicht, dass ein herkömmlicher RGB-Filter bzw. eine handelsübliche Kamera verwendet wird.

In einer Ausgestaltung wird zum Erfassen der Lumineszenzsignale eine Multispektralkamera verwendet. Insbesondere umfasst die Multispektralkamera einen Bildsensor und/oder mehrere Filter, um die Lumineszenzsignale in den unterschiedlichen Farbkanäle zu erfassen.

Jeder Filter ist typischerweise dazu eingerichtet, Licht eines bestimmten Farbkanals durchzulassen. So enthält das gefilterte Licht eine Aussage über die Helligkeit des betreffenden Farbkanals. Insbesondere sind die Filter fest mit dem Bildsensor verbunden. Je Farbkanal ist typischerweise ein Filter vorhanden.

In einer Ausgestaltung sind die Filter Teile einer Filteranordnung. Insbesondere sind in der Filteranordnung eine Vielzahl von Filterelementen jedes der mehreren Filter vorhanden. Auf diese Weise kann Licht gefiltert werden, welches auf einen Bereich eines Bildsensors der Multispektralkamera einfällt.

Jeder Filter ist damit in eine Vielzahl einzelner Filterelemente unterteilt, die nebeneinander vorliegen. Die Filterelemente liegen insbesondere in einem Muster vor. Derartige Filter werden auch als Mosaikfilter bezeichnet. Einfallendes Licht fällt durch ein Filterelement auf einen Bildsensor. Beispiele für derartige Filter sind Bayer-Filter, RGBE-Filter, RYYB-Filter, CYYM-Filter, RGBW-Filter, Super-CCD-Filter, usw. Insbesondere ist jedes einzelne Filterelement einem Bereich des Bildsensors zugeordnet, bevorzugt einem Bildpunkt oder Pixel des Bildsensors. Der Bildsensor enthält insbesondere eine Vielzahl von Pixeln, die Helligkeitswerte erfassen können.

Es kann als Multispektralkamera eine beliebige herkömmliche Digitalkamera verwendet werden, die einen RGB-Bildsensor aufweist, insbesondere eine Spiegelreflexkamera, beispielsweise eine Canon EOS 2000. Diese Ausgestaltung macht das Verfahren besonders einfach und kostengünstig. Es ist vorteilhaft, einen etwaig vorhandenen Infrarotfilter zu entfernen. Dies verbessert die Berechnung der Einzelsignale, da Solarzellen insbesondere Lumineszenzsignale im Infrarotbereich emittieren und die Untersuchung deshalb dort besonders vorteilhaft ist.

Zum Entfernen des Infrarotfilters (Infrarot-Sperrfilter) kann die Kamera aufgeschraubt werden, der Kamerakörper kann geöffnet werden, es können Kabel wie z. B. Flachkabel gelöst werden, der Bildsensor kann gelöst und herausgenommen werden und/oder der am Bildsensor befestigte Infrarotfilter aus Glas oder Plastik kann entfernt werden. Ggf. kann der Infrarotfilter durch einen Infrarot-Passfilter oder einen Platzhalter ersetzt werden, etwa aus Glas oder Kunststoff. Die Kamera kann anschließend wieder zusammengesetzt werden.

Es können davon abweichend auch andere Bildsensoren verwendet werden. Ein Beispiel sind Bildsensoren, bei denen die unterschiedlichen Farbsignale in übereinander liegenden Regionen detektiert werden, wie z. B der Foveon X3 von DB HiTek. Diesbezüglich ist das Verfahren nicht beschränkt.

In einer Ausgestaltung unterscheidet sich eine Charakteristik jedes Farbkanals von einer Charakteristik jedes Einzelsignals jeder Solarzelle. Mit anderen Worten ist die Multispektralkamera bzw. ein Filter der Multispektralkamera nicht so eingerichtet, dass sie selektiv nur ein Einzelsignal einer Solarzelle durchlässt. Es hat sich gezeigt, dass es nicht notwendig ist, Farbkanäle zu erfassen, die den Einzelsignalen entsprechen. Insbesondere ist ein Farbkanal der Multispektralkamera nicht repräsentativ für ein Einzelsignal der einer Solarzelle. Es hat sich gezeigt, dass es auch nicht notwendig ist, Farbkanäle zu erfassen, die die Einzelsignale repräsentieren. Dies erlaubt eine große Freiheit der verwendeten Kamera bzw. der verwendeten Filter. Die Kamera bzw. der Filter kann unabhängig von der zu untersuchenden Solarzelle gewählt werden.

Mit Charakteristik ist folgendes gemeint: Insbesondere unterscheiden sich jeder Farbkanal und jedes Einzelsignal hinsichtlich ihrer unteren Schwelle der Wellenlänge, ab der Licht detektiert wird (Farbkanal) oder vorhanden ist bzw. emittiert wird (Einzelsignal). Alternativ oder ergänzend unterscheiden sich jeder Farbkanal und jedes Einzelsignal hinsichtlich ihrer oberen Schwelle der Wellenlänge, bis zu der Licht detektiert wird (Farbkanal) oder vorhanden ist bzw. emittiert wird. Alternativ oder ergänzend unterscheiden sich jeder Farbkanal und jedes Einzelsignal hinsichtlich der Verteilung und/oder Intensität ihrer jeweiligen Wellenlängen bzw. Wellenlängenbereiche.

In einer Ausgestaltung werden beim Berechnen Informationen zum Spektrum der Farbkanäle berücksichtigt. Insbesondere wird eine spektrale Empfindlichkeit der Farbkanäle der Multispektralkamera berücksichtigt. Beispielsweise wird aus der spektralen Empfindlichkeit und den emittierten Spektren der Einzelsignale der einzelnen Solarzellen die Farbkanal-Response der Multispektralkamera berechnet.

In einer Ausgestaltung werden beim Berechnen Informationen zum emittierten Spektrum der Einzelsignale der Solarzelle berücksichtigt.

Die Informationen umfassen insbesondere, welche Wellenlängen die von der Solarzelle emittierten Signale haben. Beispielsweise wird ein Verhältnis zwischen der Intensität des emittierten Lichts bei zwei unterschiedlichen Wellenlängen berücksichtigt. Es kann das emittierte Spektrum selbst berücksichtigt werden.

Mit diesen Informationen kann der Anteil einer einzelnen Solarzelle am emittierten Licht besonders einfach berechnet werden. Insbesondere werden für jede Solarzelle derartige Informationen berücksichtigt, um Einzelsignale jeder Solarzelle besonders einfach isolieren zu können.

Die Informationen können z. B. ermittelt werden, indem die einzelnen Solarzellen der Stapelsolarzelle mechanisch getrennt werden, durch Lumineszenz zum Leuchten gebracht werden und anschließend für eine oder mehrere Solarzellen ein jeweiliges Spektrum des emittierten Lichts ermittelt wird, beispielsweise mit einem Spektrometer. Alternativ oder ergänzend kann ein Spektrum aus dem Aufbau der Solarzellen bekannt sein oder berechnet werden. Alternativ oder ergänzend können derartige Informationen vom Hersteller der Stapelsolarzelle bereitgestellt werden. Das Verfahren kann die Ermittlung der Informationen umfassen. Insbesondere können die Informationen anhand einer ersten Stapelsolarzelle ermittelt werden und es kann eine zweite Stapelsolarzelle unter Verwendung der Informationen untersucht werden.

Die Informationen werden berücksichtigt. Insbesondere fließen die Information als Eingangsparameter in die Berechnung ein.

Optional werden ferner Informationen zum emittierten Spektrum der Einzelsignale einer weiteren Solarzelle, bevorzugt aller Solarzellen berücksichtigt.

In einer Ausgestaltung umfasst das Berechnen ein Ermitteln, mittels der Informationen zum emittierten Spektrum der Einzelsignale, eines Verhältnisses zwischen einem emittierten Einzelsignal in einem ersten Farbkanal und einem emittierten Einzelsignal in einem zweiten Farbkanal für die zu untersuchende Solarzelle der Stapelsolarzelle. In einer Ausgestaltung umfasst das Berechnen ein Ermitteln, mittels der Informationen zum emittierten Spektrum der Einzelsignale, eines Verhältnisses zwischen einem emittierten Einzelsignal in dem ersten Farbkanal und einem emittierten Einzelsignal in dem zweiten Farbkanal für eine weitere Solarzelle der Stapelsolarzelle.

In einer Ausgestaltung umfasst das Berechnen ein Ermitteln eines Verhältnisses zwischen dem erfassten Lumineszenzsignal in dem ersten Farbkanal und dem erfassten Lumineszenzsignal in dem zweiten Farbkanal. Insbesondere umfasst das Berechnen ein Berechnen, insbesondere mittels der drei ermittelten Verhältnisse, des Anteils der Einzelsignale der zu untersuchenden Solarzelle an den Lumineszenzsignalen der Stapelsolarzelle. Aus dem Anteil wird insbesondere das Einzelsignal isoliert.

Insbesondere werden Verhältnisse bzw. Anteile von Intensitäten eines, mehrerer oder aller emittierten Einzelsignale und/oder des Lumineszenzsignals ermittelt. Es kann sich dabei um Gesamt-Intensitäten der jeweiligen Signale, um mittlere Intensitäten der jeweiligen Signale und/oder um Unterbereiche und/oder einzelne Wellenlängen aus den jeweiligen Signalen handeln.

Beispielsweise kann das Verhältnis rot/blau in der oberen Solarzelle einer Tandemsolarzelle 1,3 betragen und das Verhältnis rot/blau in der unteren Solarzelle kann 1,0 betragen. Wird nun in den erfassten Lumineszenzsignalen ein Verhältnis rot/blau von 1,2 ermittelt, kann der Anteil der oberen Solarzelle mit 2/3 berechnet werden. Insbesondere wird zudem der Anteil der unteren Solarzelle berechnet, welcher in diesem Beispiel 1/3 beträgt.

Insbesondere werden die genannten Schritte für mehrere Verhältnisse von Farbkanälen durchgeführt, beispielsweise für alle möglichen Verhältnisse aller Farbkanäle. Es kann ein Mittelwert zwischen den so ermittelten Anteilen der zu untersuchenden Solarzelle berechnet werden. So kann die Genauigkeit erhöht werden.

In einer Ausgestaltung wird eine mathematische Faltung mit dem emittierten Spektrum der Einzelsignale durchgeführt. Insbesondere erfolgt eine Faltung wie unten im Beispiel beschrieben. Es hat sich gezeigt, dass durch eine Faltung besonders zweckmäßig Einzelsignale berechnet werden können.

In einer Ausgestaltung ist die Stapelsolarzelle eine Perowskit-Silizium-Tandemzelle oder eine organische Stapelsolarzelle. Bei diesen Stapelsolarzellen hat sich die Ermittlung der Einzelsignale als besonders gut herausgestellt.

Ein weiterer Aspekt der Erfindung ist ein System zur Untersuchung einer Stapelsolarzelle. Das System umfasst eine Vorrichtung zur Erfassung von Lumineszenzsignalen einer Stapelsolarzelle in mehreren Farbkanälen, beispielsweises eine Multispektralkamera. Insbesondere enthalten die Lumineszenzsignale überlagerte Einzelsignale unterschiedlicher Solarzellen der Stapelsolarzelle. Das System umfasst ferner eine Recheneinheit zum Berechnen von Einzelsignalen einer Solarzelle der Stapelsolarzelle aus den erfassten Lumineszenzsignalen. Alle Eigenschaften, Ausgestaltungen und Vorteile der eingangs beschriebenen Verfahrens können auch für das System gelten und umgekehrt.

Die Vorrichtung zur Erfassung und die Recheneinheit können räumlich getrennt voneinander vorliegen. Die Recheneinheit kann ein Computer sein. Vorzugsweise umfasst die Recheneinheit einen Prozessor und einen Speicher mit einem Computer-Programm-Code, d. h. auf dem Speicher speicherbare Befehle. Der Prozessor, der Speicher und der Computer-Programm-Code sind insbesondere so konfiguriert, dass die Berechnung durchgeführt werden kann.

Ein weiterer Aspekt der Erfindung ist eine Verwendung einer Multispektralkamera zur Untersuchung einer Stapelsolarzelle. Es werden mittels der Multispektralkamera Lumineszenzsignale einer Stapelsolarzelle im mehreren Farbkanälen erfasst. Insbesondere enthalten die Lumineszenzsignale überlagerte Einzelsignale unterschiedlicher Solarzellen der Stapelsolarzelle. Insbesondere erfolgt die Untersuchung mit dem erfindungsgemäßen Verfahren.

### Beispiel

Im Folgenden werden rein beispielhaft Details eines konkreten Ausführungsbeispiels eines erfindungsgemäßen Verfahrens beschrieben. Insbesondere wird eine mathematische Faltung beschrieben. Es erfolgt insbesondere eine Neuzuordnung von Farbkanälen in einem Bild mit mehreren Farbkanälen. Es wird eine Multispektralkamera mit N Farbkanälen betrachtet. Der i-te Farbkanal der Kamera hat eine zugehörige Quanteneffizienz (Quantenausbeute) QEᵢ (λ), mit i = 1... N. Bei einer Standard-Spiegelreflex-Kamera mit drei Farbkanälen (rot, blau und grün) werden die Quanteneffizienzen beispielsweise wie folgt dargestellt QE_{red}(λ), QE_{blue}(λ), QE_{green}(λ).

Jedes Kamerapixel erfasst ein spezifisches Spektrum φ(λ) einer Stapelsolarzelle, wie z. B. das Lumineszenzsignal einer Tandemsolarzelle. Der Einfachheit halber betrachten wir ein einzelnes Kamerapixel. Das Spektrum setzt sich aus M Spektralkanälen (Einzelsignalen) zusammen, die jeweils einen Teil des Spektrums darstellen, so dass φ(λ) = Σⱼφⱼ (λ), mit j = 1...M. Mit anderen Worten ergibt die Summe aller Spektralkanäle das Lumineszenzsignal der Stapelsolarzelle. M entspricht insbesondere der Anzahl der einzelnen Solarzellen in der Stapelsolarzelle. Es ist zu beachten, dass sich die M Spektralkanäle bis zu einem gewissen Grad überlappen können.

Die Erfinder haben erkannt, dass es grundsätzlich rechnerisch möglich ist, die Farbkanäle i auf die Spektralkanäle j abzubilden. Insbesondere gilt M ≤ N. Insbesondere sind die Antworten der Farbkanäle i auf die Spektralkanäle j linear unabhängig. Beispielsweise kann eine Kamera mit Farbpixeln verwendet werden, um ein Elektrolumineszenzbild einer Tandemsolarzelle aufzunehmen. Die Farbkanäle im Bild können verwendet werden, um das Signal der oberen und unteren Zelle zu trennen, d. h. man kann die Farbkanäle des Bildes den Spektralkanälen der oberen und unteren Solarzelle zuordnen. Die Antwort des Farbkanals i auf das Spektrum j lässt sich wie folgt ausdrücken: ${Φ}_{i , j} = \int {QE}_{i} \left(λ\right) {φ}_{j} \left(λ\right) dλ ,$ wobei Φ_{i,j} die Farbkanalantwort ist. Da wir die Farbkanäle i auf die Farbkanäle j abbilden wollen, ist es zweckmäßig, die Farbspektren j so zu normalisieren, dass ${θ}_{j} {\hat{φ}}_{j} \left(λ\right) = {φ}_{j} \left(λ\right) ,$ wobei θⱼ die Intensität des j-ten Spektrums und (λ) das normierte Spektrum $\int {\hat{φ}}_{j} \left(λ\right) dλ = 1$ ist. Unter Verwendung des normalisierten Spektrums können wir für Gleichung 1 wie folgt schreiben: ${Φ}_{i , j} = {θ}_{j} \int {QE}_{i} \left(λ\right) {\hat{φ}}_{j} \left(λ\right) dλ .$

Unter Verwendung der obigen Definitionen können wir die normalisierte Antwort auf Farbkanal i bis j wie folgt definieren: ${\hat{Φ}}_{i , j} = \int {QE}_{i} \left(λ\right) {\hat{φ}}_{j} \left(λ\right) dλ .$

Die Gesamt-Farbkanal-Antwort ergibt sich dann als ${Φ}_{i} = {\sum }_{j} {θ}_{j} {\hat{Φ}}_{i , j}$

Diese Gleichung kombiniert alle Spektralkomponenten (j), gewichtet nach ihren Intensitäten (Θⱼ), um die Gesamtantwort für jeden Farbkanal zu berechnen.

Um die Farbkanäle Φᵢ in die Spektralkanäle θⱼ umzurechnen, kann man eine gewöhnliche Lösung der Gleichung (6) nach der Methode der kleinsten Quadrate (engl.: "ordinary least squares", OLS) verwenden. Man kann die Gesamtgleichung der Farbkanalantwort, Gleichung (6), in Matrixform umschreiben. Wir definieren ${Φ}_{m} = {\left[{Φ}_{1},{Φ}_{2},…,{Φ}_{N}\right]}^{T} \left(gemessene Farbkanalintensitäten\right)$ ${θ}^{˜} = {\left[{θ}_{1},{θ}_{2},…,{θ}_{M}\right]}^{T} \left(spektrale Intensitäten\right)$ $\hat{Φ} = {\left[{\hat{Φ}}_{i , j}\right]}_{N \times M} \left(Matrix der normalisierten Antworten\right)$

Die Gesamt-Farbkanal-Antwortgleichung wird ${Φ}_{m} = \hat{Φ} {θ}^{˜} .$

Die gewöhnliche Lösung der kleinsten Quadrate lautet dann $\left({\hat{Φ}}^{T}\hat{Φ}\right) {θ}^{˜} = {\hat{Φ}}^{T} {Φ}_{m} ,$ wobei der Lösungsvektor der kleinsten Quadrate ist, der die besten Schätzungen von θⱼ enthält.

Das System ist insbesondere dann lösbar, wenn die Kanalantworten für jedes Teilspektrum j linear unabhängig sind. Die lineare Gleichung von Gleichung (11) kann im Hinblick auf ihre Bedingungszahl analysiert werden, so dass quantifiziert werden kann, inwieweit die Farbkanäle Φᵢ genau und eindeutig auf θⱼ abgebildet werden können.

Der Kerngedanke besteht darin, die Quanteneffizienz (QE) der einzelnen Farbkanäle einer Kamera und die von der Kamera erfassten Spektralinformationen zu nutzen, um eine Beziehung zwischen den Farbkanälen und den Spektralkomponenten herzustellen. Die Zuordnung kann mit Hilfe einer Lösung der kleinsten Quadrate erreicht werden, wenn die Anzahl der Spektralkanäle (M) kleiner oder gleich der Anzahl der Farbkanäle (N) ist.

Es ist nicht notwendig, die Methode der kleinsten Quadrate zu verwenden. Zum Beispiel kann wir das System reduziert werden, wenn mehr Farbkanäle als Einzelsignale vorliegen. Wenn zwei Einzelsignale vorliegen, werden mindestens zwei Farbkanäle benötigt, um sie zu trennen. Wenn mehr Farben als Einzelsignale vorliegen, könnten auch einige Farben ignoriert werden. Dadurch bleiben jedoch valide Informationen in den ungenutzten Farbkanälen unberücksichtigt. Mit der Methode der kleinsten Quadrate können vorteilhaft Informationen aus allen Farbkanälen genutzt werden. Damit kann wir eine höhere Genauigkeit erreicht werden und ggf. das Rauschen abgeschätzt werden.

Nachfolgend werden Ausführungsbeispiele der Erfindung auch anhand von Figuren näher erläutert. Merkmale der Ausführungsbeispiele können einzeln oder in einer Mehrzahl mit den beanspruchten Gegenständen kombiniert werden, sofern nichts Gegenteiliges angegeben ist. Die beanspruchten Schutzbereiche sind nicht auf die Ausführungsbeispiele beschränkt.

Es zeigen:
- Figur 1:: einen schematischen Ablauf eines erfindungsgemäßen Verfahrens,
- Figur 2:: eine schematische Darstellung eines Systems,
- Figur 3:: eine schematische Darstellung einer Stapelsolarzelle bei der Durchführung des Verfahrens,
- Figur 4:: eine schematische Darstellung einer Filteranordnung, sowie
- Figur 5:: einen vergrößerten Detailausschnitt einer Multispektralkamera.

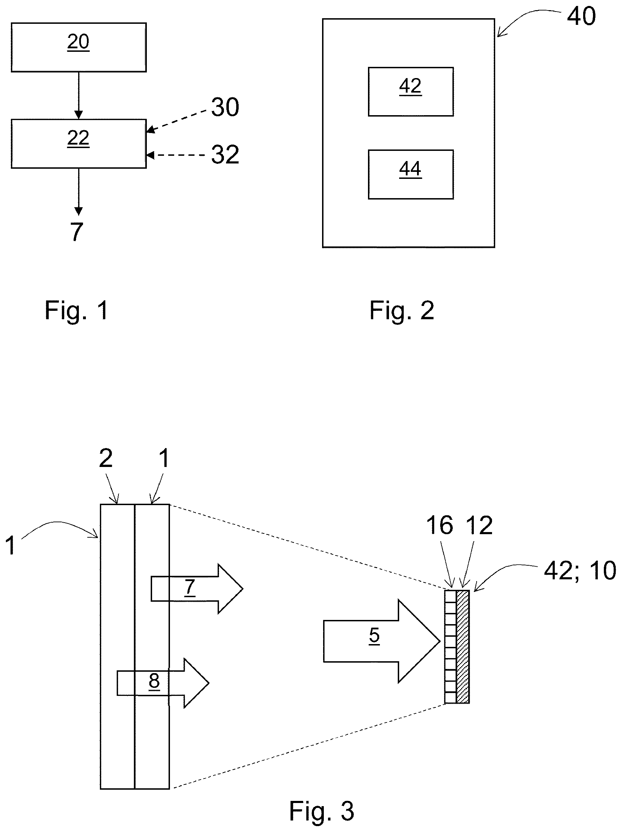

Figur 1 zeigt schematisch ein erfindungsgemäßes Verfahren zur Untersuchung einer Stapelsolarzelle. Es erfolgt ein Erfassen 20 von Lumineszenzsignalen der Stapelsolarzelle in mehreren Farbkanälen. Die Lumineszenzsignale enthalten überlagerte Einzelsignale unterschiedlicher Solarzellen der Stapelsolarzelle. Es erfolgt anschließend ein Berechnen 22 von Einzelsignalen einer Solarzelle der Stapelsolarzelle aus den erfassten Lumineszenzsignalen. Optional können dabei Informationen 30 zum Spektrum der Farbkanäle und/oder Informationen 32 zum emittierten Spektrum der Einzelsignale der Solarzelle berücksichtigt werden.

Figur 2 zeigt schematisch ein System 40 zur Untersuchung einer Stapelsolarzelle. Das System 40 umfasst eine Vorrichtung 42 zur Erfassung von Lumineszenzsignalen einer Stapelsolarzelle in mehreren Farbkanälen. Das System umfasst ferner eine Recheneinheit 44 zum Berechnen von Einzelsignalen einer Solarzelle der Stapelsolarzelle aus den erfassten Lumineszenzsignalen. Die Vorrichtung 42 und die Recheneinheit 44 können in einer Einheit oder in separaten Einheiten, gegebenenfalls räumlich getrennt, vorliegen.

Figur 3 zeigt schematisch Aspekte des erfindungsgemäßen Verfahrens in einer Schnittdarstellung. Auf der linken Seite ist eine Stapelsolarzelle 1 dargestellt, die hier rein beispielhaft zwei Solarzellen enthält, nämlich eine erste Solarzelle 1 und eine darunter angeordnete zweite Solarzelle 2. Die zwei Solarzellen 1, 2 werden angeregt, um durch Lumineszenz Licht zu emittieren. Mittels zweier Pfeile ist schematisch dargestellt, dass die Solarzelle 1 ein Einzelsignal 7 emittiert und die Solarzelle 2 ein Einzelsignal 8 emittiert. Jedes Einzelsignal 7, 8 ist hierbei eine elektromagnetische Strahlung, beispielsweise im Infrarotbereich. Bauartbedingt unterscheiden sich die emittierten Wellenlängenbereiche der Einzelsignale 7, 8 voneinander. Die Einzelsignale 7, 8 überlagern sich und ergeben gemeinsam Lumineszenzsignale 5, die durch den auf der rechten Seite gezeigten Pfeil dargestellt sind.

Die Lumineszenzsignale 5 werden erfindungsgemäß in mehreren Farbkanälen erfasst. Dargestellt sind zu diesem Zweck Komponenten einer Multispektralkamera 10, nämlich ein Bildsensor 10 und eine vor dem Bildsensor 10 angeordnete Filteranordnung 16. Diese dienen als Vorrichtung 42 zur Erfassung von Lumineszenzsignalen. Die Filteranordnung 16 dient dazu, die einfallende Lumineszenzsignale 5 in unterschiedlichen Bereichen der Filteranordnung 16 unterschiedlich zu filtern, um die Lumineszenzsignale 5 in mehreren Farbkanälen erfassen zu können. Insbesondere ist der Bildsensor 12 lediglich zur Erkennung von Helligkeitswerten eingerichtet.

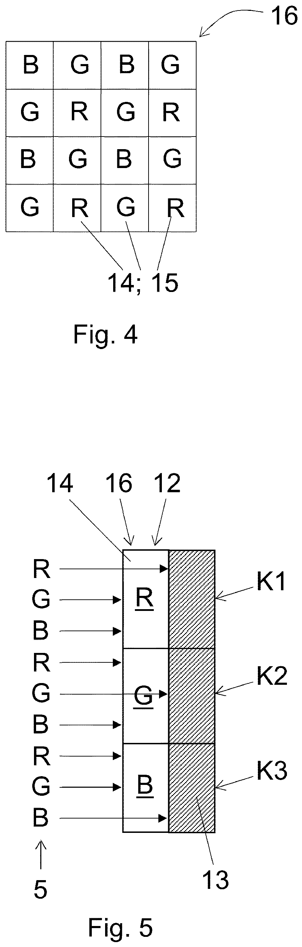

Ein Ausschnitt einer beispielhaften Filteranordnung 16 ist in Figur 4 in einer Draufsicht dargestellt. Es handelt sich hierbei um einen Bayer-Filter. Einzelne Filter in Form kleiner Filterelemente 15, die jeweils einen bestimmten Wellenlängenbereich des eintreffenden Lichts durchlassen, sind in einem abwechselnden Muster flächig angeordnet. Ein mit "B" gekennzeichnetes Filterelement 15 ist etwa durchlässig für blaues Licht und undurchlässig für andere Wellenlängenbereiche. Dasselbe gilt für "G" mit grün und "R" mit rot.

Erneut Bezug nehmend auf Figur 3 dient die Filteranordnung 16 dazu, die Lumineszenzsignale 5, die auf einzelne Bereiche wie beispielsweise Bildpunkte (Pixel) des Bildsensors fallen, in unterschiedliche Kanäle zu filtern. Für einen Bereich, vor dem sich ein mit "B" gekennzeichnetes Filterelement 15 befindet, kann somit ein Helligkeitswert für blaues Licht ermittelt werden.

Figur 5 zeigt ein vergrößertes Detail einer ähnlichen Anordnung. Es ist ersichtlich, dass der Bildsensor 12 in eine Vielzahl von Bildpunkten 13 unterteilt ist. Jedem Bildpunkt 13 ist ein Filter 14 der Filteranordnung 16 zugeordnet. Der oben dargestellte Filter 14 ist durchlässig für rotes Licht, der mittig dargestellte Filter 14 für grünes Licht und der untere Filter 14 für blaues Licht. Von links einfallende Lumineszenzsignale 5, die Anteile von grünem, rotem und blauem Licht haben, werden entsprechend gefiltert. Der obere Bildpunkt 13 gehört zu einem ersten Farbkanal K1, der Intensitäten roter Strahlung erfasst. Der mittlere Bildpunkt 13 gehört zu einem zweiten Farbkanal K2, der Intensitäten grüner Strahlung erfasst, und der untere Farbkanal 13 gehört zu einem dritten Farbkanal K3, der Intensitäten blauer Strahlung erfasst. Auf diese Weise werden die Lumineszenzsignale 5 in mehreren Farbkanälen K1, K2, K3 erfasst.

Diese Darstellung ist rein schematisch. Üblicherweise enthält ein Bildsensor 12 eine sehr große Zahl an Bildpunkten 13, die - wie in Figur 4 ausschnittsweise angedeutet - in einer Fläche verteilt angeordnet sind. So kann ein geeignet aufgelöstes zweidimensionales Bild erzeugt werden. Üblicherweise gehört zu jedem Farbkanal K1, K2, K3 eine Vielzahl an Filtern 14 bzw. Filterelementen 15, sodass in jedem Farbkanal K1, K2, K3 durch die erfassten Lumineszenzsignale eine eigene, einfarbige Abbildung der Stapelsolarzelle erzeugt werden kann. Das Resultat ist ein farbiges Bild, das sich aus insbesondere einfarbigen Teilbildern zusammensetzt. Jedes Teilbild repräsentiert einen Farbkanal K1, K2, K3.

In einer Recheneinheit können anschließend aus den erfassten Lumineszenzsignalen die Einzelsignale ermittelt bzw. isoliert werden. Auf diese Weise wird eine aufwändige separate Erfassung der Einzelsignale überflüssig.

Es können mehr als drei Farbkanäle vorhanden sein. Es können mehr als zwei Solarzellen vorhanden sein.

**Bezugszeichenliste**

| | |
|---|---|
| Stapelsolarzelle | 1 |
| erste Solarzelle | 2 |
| zweite Solarzelle | 3 |
| Lumineszenzsignale | 5 |
| Einzelsignale | 7, 8 |
| Multispektralkamera | 10 |
| Bildsensor | 12 |
| Bildpunkte | 13 |
| Filter | 14 |
| Filterelement | 15 |
| Filteranordnung | 16 |
| Rot | R |
| Grün | G |
| Blau | B |
| Farbkanäle | K1, K2, K3 |
| Erfassen | 20 |
| Berechnen | 22 |
| Informationen | 30 |
| Informationen | 32 |
| System | 40 |
| Vorrichtung | 42 |
| Recheneinheit | 44 |

## Patentansprüche

1. Verfahren zur Untersuchung einer Stapelsolarzelle (1), umfassend:
- Erfassen (20) von Lumineszenzsignalen (5) einer Stapelsolarzelle (1) in mehreren Farbkanälen (K1, K2, K3), wobei die Lumineszenzsignale (5) überlagerte Einzelsignale (7, 8) unterschiedlicher Solarzellen (2, 3) der Stapelsolarzelle (1) enthalten,
- Berechnen (22) von Einzelsignalen (7, 8) einer Solarzelle (2) der Stapelsolarzelle (1) aus den erfassten Lumineszenzsignalen (5).

2. Verfahren nach dem vorhergehenden Anspruch, wobei die Lumineszenzsignale (5) in mindestens drei Farbkanälen (K1, K2, K3) erfasst werden.

3. Verfahren nach dem vorhergehenden Anspruch, wobei die mindestens drei Farbkanäle (K1, K2, K3) die Farben Rot, Grün und Blau umfassen.

4. Verfahren nach einem der vorhergehenden Ansprüche, wobei zum Erfassen der Lumineszenzsignale (5) eine Multispektralkamera (10) verwendet wird, die einen Bildsensor und mehrere Filter (14) aufweist, um die Lumineszenzsignale (5) in den unterschiedlichen Farbkanäle (K1, K2, K3) zu erfassen.

5. Verfahren nach dem vorhergehenden Anspruch, wobei die Filter (14) Teile einer Filteranordnung (16) sind, in welcher eine Vielzahl von Filterelementen (15) jedes der mehreren Filter (14) vorhanden sind, um Licht zu filtern, welches auf einen Bereich eines Bildsensors der Multispektralkamera (10) einfällt.

6. Verfahren nach einem der vorhergehenden Ansprüche, wobei sich eine Charakteristik jedes Farbkanals (K1, K2, K3) von einer Charakteristik jedes Einzelsignals (7, 8) jeder Solarzelle (2, 3) unterscheidet.

7. Verfahren nach einem der vorhergehenden Ansprüche, wobei beim Berechnen Informationen (30) zum Spektrum der Farbkanäle (K1, K2, K3) berücksichtigt werden.

8. Verfahren nach einem der vorhergehenden Ansprüche, wobei beim Berechnen Informationen (32) zum emittierten Spektrum der Einzelsignale (7, 8) der Solarzelle (2) berücksichtigt werden.

9. Verfahren nach dem vorhergehenden Anspruch, wobei das Berechnen umfasst:
- Ermitteln, mittels der Informationen zum emittierten Spektrum der Einzelsignale (7, 8), eines Verhältnisses zwischen einem emittierten Einzelsignal (7, 8) in einem ersten Farbkanal (K1) und einem emittierten Einzelsignal (7, 8) in einem zweiten Farbkanal (K2) für die zu untersuchende Solarzelle (2) der Stapelsolarzelle (1), und
- Ermitteln, mittels der Informationen zum emittierten Spektrum der Einzelsignale (7, 8), eines Verhältnisses zwischen einem emittierten Einzelsignal (7, 8) in dem ersten Farbkanal (K1) und einem emittierten Einzelsignal (7, 8) in dem zweiten Farbkanal (K2) für eine weitere Solarzelle (3) der Stapelsolarzelle (1).

10. Verfahren nach dem vorhergehenden Anspruch, wobei das Berechnen umfasst:
- Ermitteln eines Verhältnisses zwischen dem erfassten Lumineszenzsignal (5) in dem ersten Farbkanal (K1) und dem zweiten Farbkanal (K2),
- Berechnen, mittels der drei ermittelten Verhältnisse, des Anteils des Einzelsignals (7, 8) der zu untersuchenden Solarzelle (2) an den Lumineszenzsignalen (5) der Stapelsolarzelle (1).

11. Verfahren nach einem der drei vorhergehenden Ansprüche, wobei eine mathematische Faltung mit dem emittierten Spektrum der Einzelsignale (7, 8) durchgeführt wird.

12. Verfahren nach einem der vorhergehenden Ansprüche, wobei die Stapelsolarzelle (1) eine Perowskit-Silizium-Tandemzelle oder eine organische Stapelsolarzelle (1) ist.

13. System (40) zur Untersuchung einer Stapelsolarzelle (1), umfassend
- eine Vorrichtung (42) zur Erfassung von Lumineszenzsignalen (5) einer Stapelsolarzelle (1) in mehreren Farbkanälen (K1, K2, K3), wobei die Lumineszenzsignale (5) überlagerte Einzelsignale (7, 8) unterschiedlicher Solarzellen (2, 3) der Stapelsolarzelle (1) enthalten,
- eine Recheneinheit (44) zum Berechnen von Einzelsignalen (7, 8) einer Solarzelle (2) der Stapelsolarzelle (1) aus den erfassten Lumineszenzsignalen (5).

14. Verwendung einer Multispektralkamera (10) zur Untersuchung einer Stapelsolarzelle (1), wobei mittels der Multispektralkamera (10) Lumineszenzsignale (5) einer Stapelsolarzelle (1) im mehreren Farbkanälen (K1, K2, K3) erfasst werden, wobei die Lumineszenzsignale (5) überlagerte Einzelsignale (7, 8) unterschiedlicher Solarzellen (2, 3) der Stapelsolarzelle (1) enthalten.
